# EUROPÄISCHE PATENTANMELDUNG

(11) **EP 0 810 747 A2**
(43) Veröffentlichungstag der Anmeldung: **03.12.1997**
(21) Anmeldenummer: 97402003.4
(22) Anmeldetag: 25.04.1997
(51) Int. Cl.: H04B 7/26

(54) **Neuordnen von FrequenzsprugGruppen für eine FDM-/TDM-Funkübertragung bei hoher Verkehrslast**

(30) Priorität: 30.04.1996 DE 19617301
(71) Anmelder: ALCATEL ALSTHOM COMPAGNIE GENERALE D'ELECTRICITE, 75008 Paris (FR)
(72) Erfinder: Brack, Stephan, 70825 Korntal-Münchingen (DE)
(74) Vertreter: Knecht, Ulrich Karl, Dipl.-Ing.

(57) **Zusammenfassung**

Zum Neuordnen von Frequenzsprung-Gruppen für eine FDM-/TDM-Funkübertragung bei hoher Verkehrslast, wie etwa der GSM-Mobilfunkübertragung, wird ein Verfahren (100) vorgeschlagen, bei dem die Zuordnung (TAB) von Trägerfrequenzen (C0 bis C3) und Zeitschlitzen (T0 bis T7) schrittweise geändert wird, indem jeweils für einen von N Teilbereichen (P1 bis P4) des TDM-Zeitrahmens neue Frequenzsprungs-Gruppen (G1 bis G11) gebildet werden, bei dem eine durchschnittliche Verkehrslast (TL) in allen Zeitschlitzen (T0 bis T7) ermittelt wird (131 B), bei dem eine Verkehrslast (TLn) für jeden der Zeitschlitze ermittelt (131 C) wird und bei dem die Zeitschlitze anhand ihrer Verkehrslasten (TLn) den Teilbereichen zugeordnet werden, um in allen Teilbereichen (P1 bis P4) eine Verkehrslast einzustellen, die der durchschnittlichen Verkehrslast (TL) weitestgehend entspricht (131 E).

Durch die Maßnahmen wird die Verkehrslast auf alle Teilbereiche (P1 bis P4) gleichmäßig verteilt, wodurch zu keiner Zeit Teilbereiche mit geringer Verkehrslast, d.h. mit vielen freien Funkübertragungskanälen, gesperrt sein können.

## Beschreibung

Die Erfindung betrifft ein Verfahren zum Neuordnen von Frequenzsprung-Gruppen nach dem Oberbegriff des Anspruchs 1 und eine das Verfahren ausführende Steuereinrichtung nach dem Oberbegriff des nebengeordneten Anspruchs, die für mindestens eine Funkstation eine FDM-/TDM-Funkübertragung steuert.

Aus DE 44 03 483 A1 sind ein solches Verfahren und eine solche Steuereinrichtung bekannt. Für eine FDM-/TDM-Funkübertragung werden dort anhand einer Tabelle Frequenzsprung-Gruppen, innerhalb derer Frequenzsprünge stattfinden für den TDM-Zeitrahmen vorgegeben und geändert (frequency redefinition), indem die Tabelle durch eine neue Tabelle ausgetauscht wird. Nach dem dortigen Verfahren wird die Tabelle schrittweise in eine neue Tabelle überführt, indem nur für jeweils einen Teilbereich des TDM-Zeitrahmens neue Frequenzsprung-Gruppen gebildet werden. Dadurch ist während der Änderung nur auf einen Bruchteil aller FDM-/TDM-Funkkanäle kein Verbindungsaufbau möglich, d.h. ein Verbindungsaufbau ist jederzeit, auch während eines Hochlastverkehrs, ohne Wartezeit (queueing) möglich. Die Bildung und Änderung der Frequenzsprung-Gruppen wird dort durch eine Steuereinrichtung durchgeführt. Diese steuert die Frequenzsprung-Schaltteile (frequency hopping units) mehrerer Funkfeststationen in einem FDM-/TDM-Funkübertragungssystem, wie z.B. dem GSM (Global System for Mobile Communications).

In dem aus DE 44 03 483 A1 bekannten Verfahren wird ein acht Zeitschlitze umfassender TDM-Zeitrahmen in gleichgroße und zueinander benachbarte Teilbereiche mit zwei Zeitschlitzen aufgeteilt. Enthält jedoch ein solcher Teilbereich viele freie FDM-/TDM-Funkübertragungskanäle, so können diese solange nicht für einen Verbindungsaufbau genutzt werden, wie für diesen Teilbereich neue Frequenzsprung-Gruppen gebildet werden. Demnach sind diese freien Funkübertragungskanäle zumindest zeitweise gesperrt. Dieser Fall sollte jedoch bei hoher Verkehrslast, insbesondere bei einer Verkehrslast größer 75%, nicht auftreten.

Aufgabe der Erfindung ist es, das oben genannte Verfahren und die dafür vorgesehene Steuereinrichtung so zu verbessern, daß auch bei hoher Verkehrslast jederzeit möglichst viele freie Funkübertragungskanäle für den Verbindungsaufbau verfügbar sind.

Gelöst wird die Aufgabe gemäß dem Verfahren mit den Merkmalen nach Anspruch 1 und gemäß der Steuereinrichtung mit den Merkmalen nach dem nebengeordneten Anspruch.

Demnach werden eine durchschnittliche Verkehrslast in allen Zeitschlitzen und eine Verkehrslast für jeden der Zeitschlitze ermittelt sowie die Zeitschlitze anhand ihrer Verkehrslast den Teilbereichen zugeordnet, um in allen Teilbereichen eine Verkehrslast einzustellen, die der durchschnittlichen Verkehrslast entspricht. Dadurch wird die Verkehrslast auf alle Teilbereiche gleichmäßig verteilt. Während dem erfindungsgemäßen Verfahren zum Neuordnen der Frequenzsprung-Gruppen (frequency redefinition) ist immer nur ein Teilbereich mit durchschnittlicher Verkehrslast für einen Verbindungsaufbau gesperrt. Teilbereiche mit einer Verkehrslast, die stark von der durchschnittlichen Verkehrslast abweicht, gibt es nicht. Damit können auch keine Teilbereiche mit geringer Verkehrslast, d.h. mit vielen freien Funkübertragungskanälen, zeitweise gesperrt sein. Es stehen immer möglichst viele freie Funkübertragungskanäle in den anderen, nicht gesperrten Teilbereichen zur Verfügung.

Vorteilhafte Ausgestaltungen der Erfindung sind den Unteransprüchen zu entnehmen.

Im weiteren wird die Erfindung anhand eines Ausführungsbeispiels und mit Hilfe folgender Zeichnungen beschrieben:
- Fig. 1,: die Tabellen mit den Frequenzsprung-Gruppen für den TDM-Zeitrahmen vor und nach ihrer Neuordnung zeigt;
- Fig. 2,: die zwei temporäre Tabellen zeigt, die jeweils einem Schritt der schrittweisen Neuordnung entsprechen;
- Fig. 3,: die schematisch ein Flußdigramm zum Verfahren zeigt;
- Fig. 4,: die ein Diagramm zur Bestimmung der Größe der Teilbereiche in Abhängigkeit von der Verkehrslast zeigt, und
- Fig. 5,: die ein Blockschaltbild der Steuereinrichtung und der daran angeschlossenen Funkfeststationen zeigt.

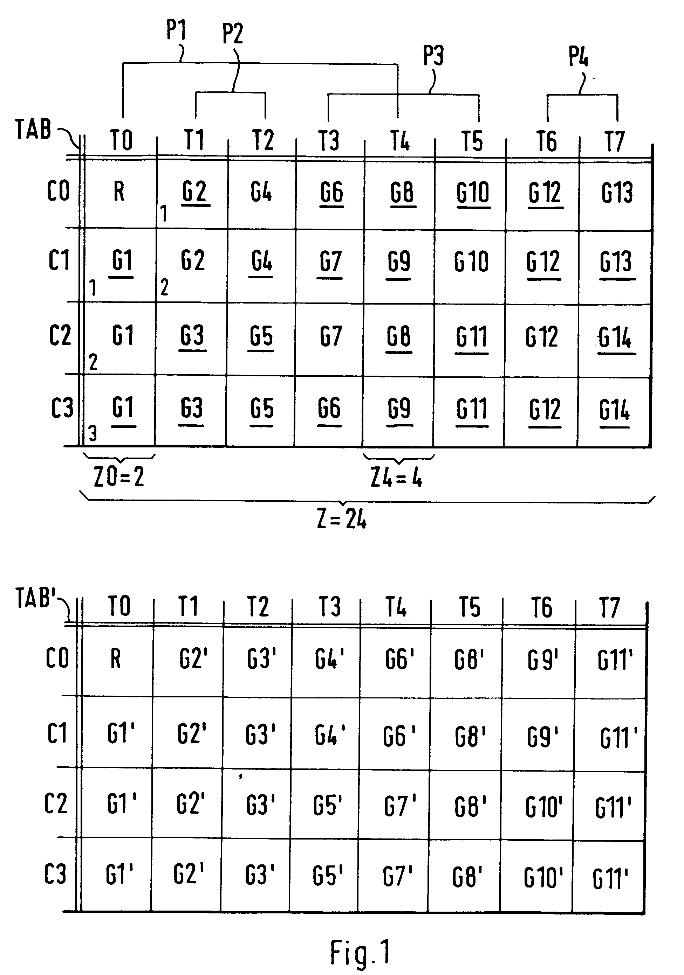

In Fig. 1 sind zwei Tabellen TAB und TAB' dargestellt, die jeweils für den TDM-Zeitrahmen Frequenzsprung-Gruppen als Zuordnung von k=8 Zeitschlitzen T0 bis T7 und m=4 Trägerfrequenzen C0 bis C3 vorgeben. Jede der Tabellen enthält somit acht Spalten, die den Zeitschlitzen T0 bis T7 entsprechen und vier Zeilen, die den Trägerfrequenzen C0 bis C3 entsprechen. Demnach gibt jede der Tabellen die Frequenzsprung-Gruppen für eine FDM-/TDM-Funkübertragung auf acht Zeit- und vier Frequenzkanälen, also auf insgesamt 32 Funkübertragungskanälen, an.

Nach der ersten Tabelle TAB sind insgesamt 14 Frequenzsprung-Gruppen G1 bis G14 gebildet, in dem innerhalb eines jeden der Zeitschlitze mindestens zwei Trägerfrequenzen einander zugeordnet sind. Beispielsweise enthält hier der Zeitschlitz T3 die Frequenzsprung-Gruppen G6 und G7, wobei erstere die Trägerfrequenzen C0 und C3 umfaßt und letztere die benachbarten Trägerfrequenzen C1 und C2 umfaßt. Ein Funkübertragungskanal der beispielsweise der Frequenzsprung-Gruppe G7 zugeordnet ist, liegt demnach im Zeitkanal T3 und kann im Frequenzsprung-Verfahren zwischen den Frequenzkanälen C1 und C2 wechseln. Eine Frequenzsprung-Gruppe G12, die alle Trägerfrequenzen umfaßt ist hier beispielsweise dem Zeitschlitz T6 zugeordnet. Innerhalb dieser Frequenzsprung-Gruppe G12 können demnach die Funkübertragungskanäle im Frequenzsprung-Verfahren zwischen vier Trägerfrequenzen wechseln. Eine Funkübertragung innerhalb der Frequenzsprung-Gruppe G12 ist demnach weniger störanfällig als eine Funkübertragung innerhalb der Frequenzsprung-Gruppe G7. Zur Übertragung von Signalisierungsinformationen, wie etwa für einen Funk-Verbindungsaufbau, ist einer der FDM-/TDM-Funkübertragungskanäle einem festen Zeitkanal-/Frequenzkanalpaar, d.h. keiner Frequenzsprung-Gruppe zugeordnet. In diesem Fall ist dies der Funkübertragungskanal R im Zeitschlitz T0 und auf der Trägerfrequenz C0.

Von den insgesamt k.m = 32 Übertragungskanälen sind momentan Z=25 Funkübertragungskanäle belegt. In Fig. 1, Tabelle TAB ist jeder belegte Funkübertragungskanal durch einen Querstrich im entsprechender Tabellenkästchen gekennzeichnet (siehe in TAB z.B. Funkübertragungskanal auf der Trägerfrequenz C1 und im Zeitschlitz T2). Die momentane durchschnittliche Verkehrslast ist hier 24÷32=75%. Im Zeitschlitz T0 sind momentan nur Z0=2 Funkübertragungskanäle belegt, so daß hier die Verkehrslast 2÷4=50% beträgt. Im Zeitschlitz T4 sind alle Funkübertragungskanäle belegt (Z4=4), so daß hier die Verkehrslast 100% beträgt. Wie erfindungsgemäß die erste Tabelle TAB in die zweite Tabelle TAB' mittels Auswertung der Verkehrslasten überführt wird, wird später mit Hilfe der Fig. 1 bis 3 erläutert. Zunächst wird hier der Zweck der "frequency redefinition" an sich kurz beschrieben:

Die erste Tabelle TAB ermöglicht eine FDM-/TDM-Funkübertragung im Frequenzsprung-Verfahren mit 14 Frequenzsprung-Gruppen. Eine hohe Anzahl an Frequenzsprung-Gruppen innerhalb des TDM-Zeitrahmen bedeutet, daß wenige der Frequenzsprung-Gruppen alle Trägerfrequenzen umfassen, wodurch nur in diesen wenigen Frequenzsprung-Gruppen eine hohe Übertragungsqualität zu erzielen ist. Treten in einigen der Frequenzsprung-Gruppen hohe Interferenzen auf, so wird eine Neuordnung der Tabelle TAB durch Zuordnen der Trägerfrequenzen und Zeitschlitze zu neuen Frequenzsprung-Gruppen durchgeführt. Dadurch wird hier eine neue Tabelle TAB' mit weniger Frequenzsprung-Gruppen für eine bessere FDM-/TDM-Funkübertragung erstellt.

Die Erstellung einer neuen Tabelle ist etwa auch dann erforderlich, wenn eine der Trägerfrequenzen ausfällt oder vom Betreiber des FDM-/TDM-Funkübertragungssystems ein Aufschalten oder Abschalten einer Trägerfrequenz gewünscht wird.

Die neue Tabelle TAB' nach Fig. 1 enthält 11 Frequenzsprung-Gruppen, die neu gebildet wurden, im weiteren neue Frequenzsprung-Gruppen G1' bis G11' genannt. Während die Tabelle TAB noch zehn Frequenzsprung-Gruppen mit jeweils zwei Trägerfrequenzen enthält, enthält die neue Tabelle TAB' nur sechs Frequenzsprung-Gruppen mit jeweils zwei Trägerfrequenzen. Dafür enthält die neue Tabelle TAB' einen hohen Anteil an Frequenzsprung-Gruppen mit drei und mehr Trägerfrequenzen, was im Vergleich mit TAB einer höheren durchschnittlichen Übertragungsqualität entspricht. So wirken sich Störungen auf einem der Trägerfrequenzen nur gering auf die Funkübertragung in diesen Frequenzsprung-Gruppen aus.

Ausgehend von einer FDM-/TDM-Funkübertragung nach der Tabelle TAB soll nun eine FDM-/TDM-Funkübertragung nach der neuen Tabelle TAB' durchgeführt werden. Um nun von der Tabelle TAB zu der TAB' zu gelangen, wird erfindungsgemäß mittels Auswertung von ermittelten Verkehrslasten die Zuordnung von Zeit- und Frequenzkanälen für den TDM-Zeitrahmen schrittweise innerhalb jeweils nur eines Teilbereiches des Zeitrahmens geändert.

Wie bereits erläutert, beträgt die durchschnittliche Verkehrslast in allen-Zeitschlitzen 24÷32=75%. Es werden nun Teilbereiche P1 bis P4 mit z.B. jeweils 2 Zeitschlitzen gebildet. Diese Teilbereiche sollen auch eine Verkehrslast haben, die weitestgehend der durchschnittlichen Verkehrslast entspricht. Daher wird der Zeitschlitz T0, der eine geringe Verkehrslast hat (50%), mit dem Zeitschlitz T4, der eine hohe Verkehrslast hat (100%), zu einem ersten Teilbereich P1 zusammengefaßt. Dieser Teilbereich P1 hat dann eine Verkehrslast von (50% +100%)÷2=75%, d.h. eine der durchschnittlichen Verkehrslast entsprechende Verkehrslast. Ein zweiter Teilbereich P2 wird aus den Zeitschlitzen T1 und T2 gebildet, die jeweils eine Verkehrslast von 75% haben. Auch der dritte und vierte Teilbereich P3 bzw. P4 wird durch Kombination von zwei Zeitschlitzen T3 mit T5 bzw. T6 mit T7 gebildet, die eine solch hohe Verkehrslast (75%) haben.

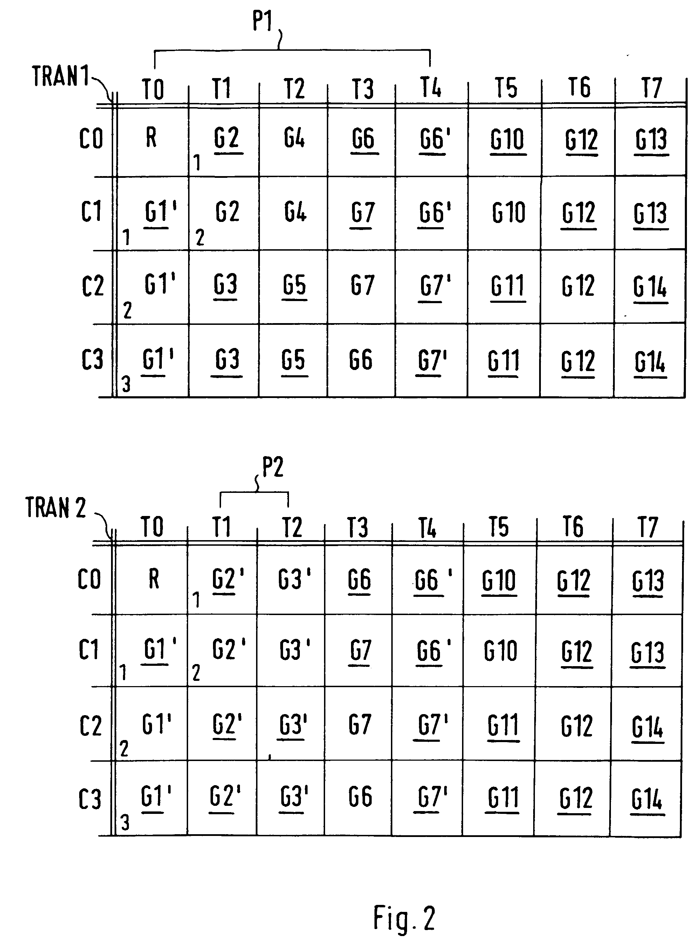

Damit haben alle Teilbereiche eine Verkehrslast von 75%, die in diesem Beispiel genau der durchschnittlichen Verkehrslast entspricht. Anhand von Fig. 2 wird nun der schrittweise Übergang von TAB auf TAB' beschrieben:

Fig. 2, die die ersten beiden Schritte der Änderung der Tabelle TAB darstellt, zeigt zwei temporäre Tabellen TRANS1 und TRANS2. Die erste temporäre Tabelle TRANS1 ergibt sich aus einer Bildung von neuen Frequenzsprung-Gruppen innerhalb des ersten Teilbereichs P1, d.h. innerhalb der Zeitschlitze T0 und T4 in der Tabelle TAB. Demnach wird in einem ersten Schritt die Tabelle TAB nur in diesem Teilbereich P1 des TDM-Zeitrahmen geändert. Hier wurden beispielsweise innerhalb des Zeitschlitzes T4 die ursprünglich zwei Frequenzsprung-Gruppen G8 und G9 zu einer neuen Frequenzsprung-Gruppe G6' zusammengefaßt.

Die temporäre Tabelle TRANS1 entspricht innerhalb der geänderten beiden Zeitschlitze TO und T4 der neuen Tabelle TAB'. Die Zuordnung innerhalb der verbleibenden sechs Zeitschlitze T1 bis T3 und T5 bis T6 entspricht der ursprünglichen Zuordnung nach der Tabelle TAB. Wird nun ein Frequenzsprung-Verfahren nach Tabelle TAB auf ein Frequenzsprung-Verfahren nach der temporären Tabelle TRANS1 umgestellt, so sind in diesem Schritt nur zwei von acht Zeitschlitzen d.h. nur ein Teil der FDM-/TDM-Funkübertragung von der Umstellung betroffen. Die Funkübertragung innerhalb der anderen sechs Zeitschlitze bleibt hiervon unberührt. Diese temporäre Tabelle TRANS1 wird so lange für eine Funkübertragung genutzt, bis innerhalb des ersten Teilbereiches P1 des Zeitrahmens, alle Frequenzsprung-Gruppen innerhalb der Zeitschlitze T0 und T4 neu gebildet sind. Dann wird die Funkübertragung entsprechend einer zweiten temporären Tabelle TRANS2 umgestellt, die sich lediglich durch eine Neuordnung der Frequenzgruppen innerhalb der Zeitschlitze T1 und T2 von der temporären Tabelle TRANS 1 unterscheidet.

Während der Erstellung einer der temporären Tabellen, kann ein Verbindungsaufbau in den nicht betroffenen sechs Zeitschlitzen ohne Wartezeit (queueing) durchgeführt werden. Da erfindungsgemäß die Verkehrslast auf alle Teilbereiche gleich verteilt wurde, stehen jederzeit möglichst viele freie Funkübertragungskanäle für einen Verbindungsaufbau zur Verfügung. In diesem Beispiel stehen 25% von den nicht betroffenen 6 Zeitschlitzen, also 25% von 24 freien Funkübertragungskanälen zur Verfügung. Da schrittweise nur ein Teilbereich des Zeitrahmens umgeordnet wird, braucht die Umordnung jeweils nur denjenigen Endgeräten (z.B. Mobilstationen) mitgeteilt zu werden, die im jeweiligen Teilbereich einen FDM-/TDM-Funkkanal belegen. Ist die jeweilige temporäre Tabelle erstellt, so können auch die verbleibenden zwei Zeitschlitze zum Verbindungsaufbau freigegeben werden.

Wie in den Fig. 1 und 2 dargestellt, wird die ursprüngliche Tabelle TAB schrittweise über die temporären Tabellen TRANS1, TRANS2 usw. in die neue Tabelle TAB' überführt. Die temporären Tabellen gelten für die FDM-/TDM-Funkübertragung nur für einen begrenzten Zeitraum der benötigt wird, um jeweils einen Teilbereich des Zeitrahmens von der ursprünglichen Anordnung der Frequenzsprung-Gruppen auf die neue Anordnung umzustellen.

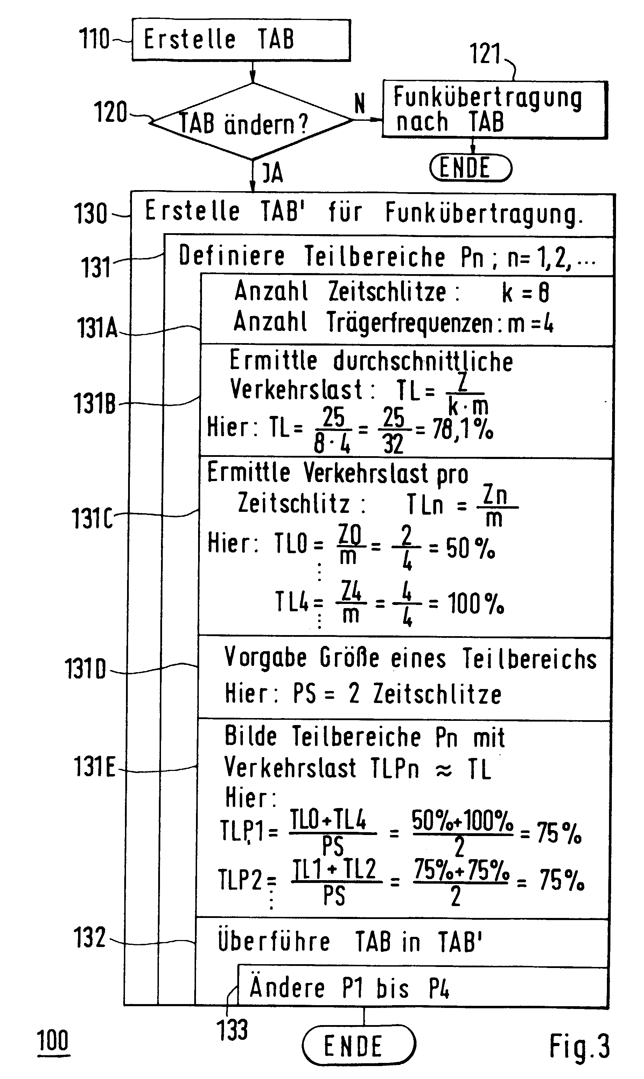

In Fig. 3 ist ein Flußdiagramm für ein erfindungsgemäßes Verfahren 100 zur Bildung und Neuordnung von Frequenzsprung-Gruppen dargestellt. Zunächst wird in einem Schritt 110 eine wie in Fig. 1 gezeigte Tabelle TAB erstellt und danach eine Funkübertragung gesteuert. Anschließend wird in einem Schritt 120 zunächst für jede Frequenzsprung-Gruppe die Funkübertragungsqualität ermittelt. Ein Maß hierfür ist beispielsweise die zeitlich ermittelte Bitfehlerrate, die sich während der Funkübertragung etwa durch sich ändernde Ausbreitungsbedingungen ändert. Durch Vergleich der jeweiligen Bitfehlerrate Q mit einem Schwellwert Qmin wird dann festgestellt, ob eine Änderung der Tabelle notwendig ist, um die Übertragungsqualität zu verbessern. Ist dies nicht der Fall, wird in einem Schritt 121 die Funkübertragung weiterhin nach der Tabelle TAB durchgeführt. Ist dies jedoch der Fall, so muß die Tabelle TAB geändert werden und es wird in einem Schritt 130 eine neue Tabelle TAB' erstellt. Dazu wird in einem Teilschritt 131 zunächst der TDM-Zeitrahmen in Teilbereiche unterteilt. Hier wird beispielsweise der Zeitrahmen, der acht Zeitschlitze umfaßt, in vier Teilbereiche P1 bis P4 zu je zwei Zeitschlitzen unterteilt. In diesem Fall sind es somit vier Schritte (4 temporäre Tabellen), innerhalb derer die Tabelle TAB in die neue Tabelle TAB' überführt wird. Eine derartige Aufteilung, daß jeder Teilbereich zwei Zeitschlitze umfaßt, ist aus folgenden Gründen besonders vorteilhaft: Zum einen ist jeder Teilbereich so klein gewählt, daß er nicht den Großteil des TDM-Zeitrahmens umfaßt, wodurch bei Änderung der Tabelle die Funkübertragung nur in geringem Umfang beeinträchtigt wird. Zum anderen ist der Teilbereich so groß gewählt, daß er mehr als einen Zeitschlitz umfaßt, wodurch die Überführung der Tabelle TAB in die neue Tabelle TAB' nicht zu viele Schritte benötigt. Es können auch Teilbereiche gebildet werden, die größer als zwei Zeitschlitze sind. Die Teilbereiche sind in diesem Beispiel gleich groß, können jedoch auch unterschiedlich groß sein.

Erfindungsgemäß werden die Teilbereiche jedoch so gebildet, daß sie jeweils eine solch hohe Verkehrslast wie die durchschnittliche Verkehrslast haben. In einem Schritt 131A werden dazu die Anzahl k der Zeitschlitze (hier k=8) und die Anzahl m der Trägerfrequenzen (hier m=4) bestimmt. Aus dem Produkt k·m ergibt sich die Anzahl der Funkübertragungskanäle (hier k·m=32). In einem Schritt 131 B wird dann die Anzahl Z aller momentan belegten Funkübertragungskanäle (hier Z=25) ermittelt. Die durchschnittliche Verkehrslast TL für alle Zeitschlitze wird nach der Gleichung: TL = Z÷(k·m) berechnet. Hier ist TL = 24÷ (8·4) = 24÷32=75%.

In einem Schritt 131 C wird für jeden einzelnen Zeitschlitz die Verkehrsentlastung TLn berechnet nach der Gleichung: TLn = Zi÷m (i = 0 bis 7), wobei Zn die Anzahl der im Zeitschlitz Tn belegten Funkübertragungskanäle ist. Hier ergibt sich z.B. für den Zeitschlitz TO eine Verkehrslast von TL0 = 20÷m = 2÷4 = 50%.

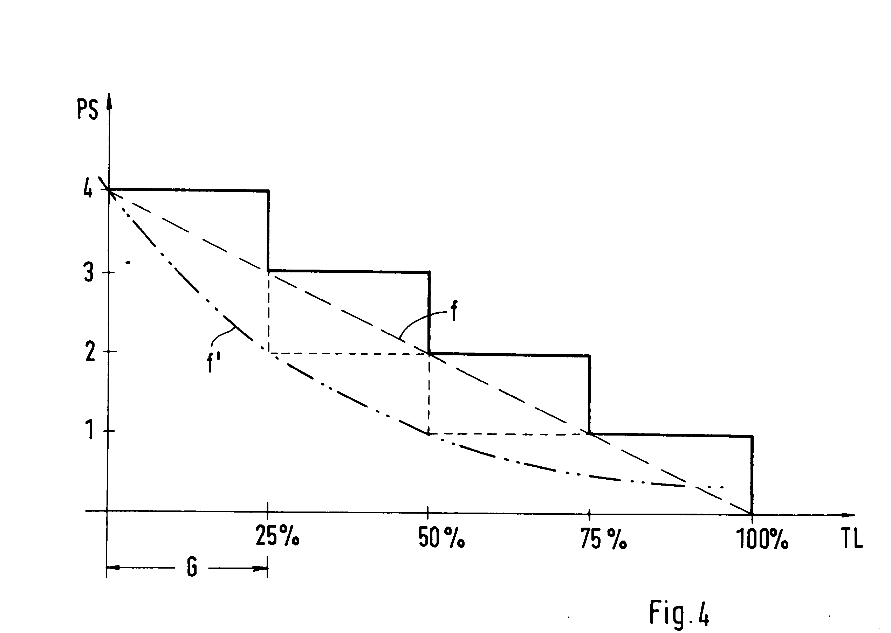

Zur Bildung der Teilbereiche wird in einem Schritt 131 D die Größe PS eines jeden Teilbereichs vorgegeben. Hier haben alle Teilbereiche diesselbe Größe von je 2 Zeitschlitzen (PS=2). Die Größe PS wird vorzugsweise anhand der ermittelten durchschnittlichen Verkehrslast TL vorgegeben. Bei einer hohen durchschnittlichen Verkehrslast TL von mehr als 75% wird PS sehr klein vorgegeben z.B. PS=1. Durch diese Maßnahme bleiben beim schrittweisen Übergang von TAB auf TAB' immer möglichst viele Zeitschlitze (hier 7) unberührt von Neuordnung der Frequenzsprung-Gruppen im jeweiligen Teilbereich. Damit werden bei hoher Verkehrslast TL möglichst viele freie Funkübertragungskanäle in den verbleibenden Teilbereichen für den Verbindungsaufbau zur Verfügung gestellt. Fig. 4 zeigt beispielhaft ein Diagramm zur Bestimmung der Größe PS der Teilbereiche in Abhängigkeit von der durchschnittlichen Verkehrslast TL.

Zunächst wird auf der Abszisse der Wertebereich für TL von 0 bis 100% untergliedert in gleichgroße Segmente der Größe G = 200%÷k (k:Anzahl der Zeitschlitze). Hier ist G = 200%÷8 = 25%.

Dann wird auf der Ordinate der Wertebereich für PS von 1 bis k÷2 (hier von 1 bis 4) eingetragen. Anhand einer linearen Funktion f, die von der Koordinate (TL=0; PS=4) zur Koordinate (TL = 100; PS=0) verläuft, wird danach PS bestimmt. Es kann auch eine nichtlineare Funktion f', wie etwa eine logarithmische Funktion, zur Bestimmung von PS verwendet werden (s. Fig. 4), um schon bei mittlerer Verkehrslast die Größe PS der Teilbereiche auf wenige Zeitschlitze einzuschränken.

Ist die Größe PS bestimmt, so werden in einem Schritt 131 E (s. Fig. 3) die Teilbereiche Pn (n=1 bis 4) gebildet, sodaß die Verkehrslasten TLPn eines jeden der Teilbereiche weitestgehend der durchschnittlichen Verkehrslast TL entsprechen. Wie bereits anhand Fig. 1 erläutert, werden hier vier Teilbereiche P1 bis P4 gebildet, die eine Verkehrslast von 75% haben.

Sind die Teilbereiche festgelegt, so wird die Tabelle TAB schrittweise in die Tabelle TAB' überführt (Schritte 132 und 133). Bei der Überführung der Tabelle wird in einer Schrittfolge 133 ein Teilbereich nach dem anderen geändert. Zunächst wird eine erste temporäre Tabelle TRANS1 erstellt, indem der erste Teilbereich P1 neu geordnet wird. Danach wird eine zweite temporäre Tabelle TRANS2 erstellt, die aus der ersten temporären Tabelle durch Neuordnung des zweiten Teilbereichs P2 hervorgeht. Anschließend wird eine dritte temporäre Tabelle TRANS3 in entsprechender Weise erstellt. Zum Schluß wird die neue Tabelle TAB' durch Neuordnung des vierten Teilabschnittes erstellt.

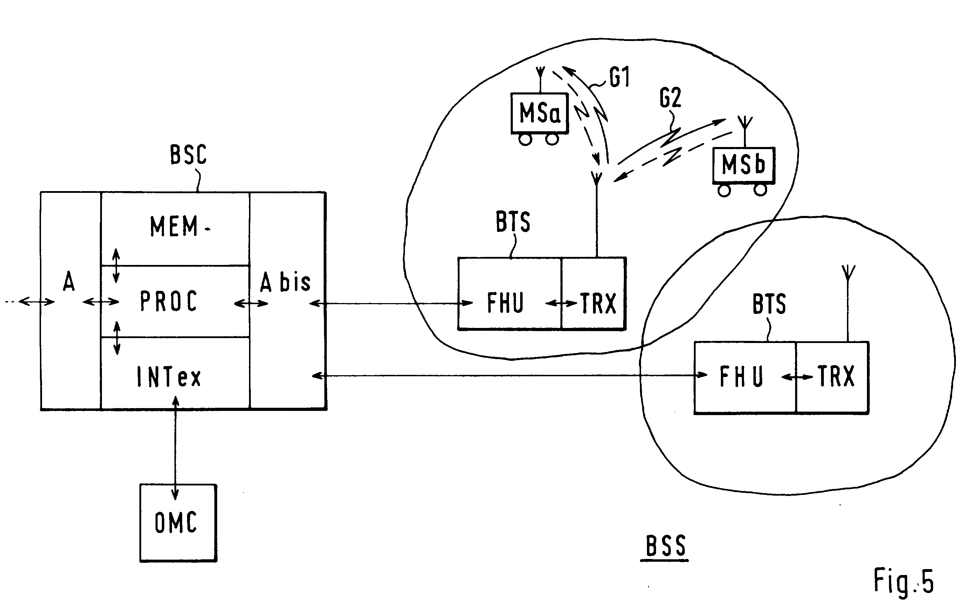

Nach Abschluß des Verfahrens 100 sind somit für den ganzen TDM-Zeitrahmen neue Frequenzsprung-Gruppen gebildet, die in der neuen Tabelle TAB' abgelegt sind. Die verschiedenen Tabellen werden beispielsweise in einem digitalen Speicher abgelegt und können für die Funkübertragung herangezogen werden. Das Erstellen und Abspeichern der Tabellen sowie die Steuerung der Funkübertragung wird in einer Steuereinrichtung durchgeführt, die anhand der Fig. 5 im weiteren näher beschrieben wird.

In Fig. 5 ist das sogenannte Funkfeststationen-Teilsystem BSS eines zellularen Mobilfunksystems schematisch dargestellt. Es enthält eine Steuereinrichtung BSC (Funkfeststationen-Steuerung), an die Funkfeststationen BTS angeschlossen sind. Die Funkfeststationen-Steuerung BSC enthält einen Steuerrechner PROC mit einer Mikroprozessorschaltung, einen daran angeschlossenen Speicher MEM sowie verschiedene Schnittstellenschaltungen A, Abis, INTex, im weiteren kurz Schnittstelle genannt. Eine der Schnittstellen A dient zur Verbindung der Steuereinrichtung BSC mit einer Funkvermittlungsstelle des Mobilfunksystems über eine Signalisierungsstrecke, die z.B. nach dem Standard "CCITT Nr. 7" ausgelegt ist. Eine andere der Schnittstellen Abis dient zum Anschluß der Funkfeststationen an die Steuereinrichtung über Signalisierungsstrecken, die beispielsweise nach dem "PCM30"-Standard ausgelegt sind. Eine weitere Schnittstelle INTEX, die beispielsweise eine "X.25-Schnittstelle" ist, ermöglicht die Verbindung der Steuereinrichtung BSC mit einer Betriebs- und Wartungszentrale OMC des Mobilfunksystems.

Die Steuereinrichtung BSC ist somit über die Schnittstelle Abis mit den Feststationen BTS verbunden. Jede Funkfeststation enthält ein sogenanntes Frequenzsprung-Schaltteil FHU (frequency hopping unit) und einen damit verbundenen Funksendeempfänger TRX. Das Frequenzsprung-Schaltteil FHU führt in Abhängigkeit von der Steuereinrichtung BSC das Frequenzsprung-Verfahren innerhalb der Funkfeststationen BTS durch. Die Steuereinrichtung BSC (Funkfeststationen-Steuerung) steuert das Frequenzsprung-Schaltteil FHU einer der Funkfeststationen BTS beispielsweise wie folgt:

Im digitalen Speicher MEM der Steuereinrichtung ist eine Tabelle abgespeichert, die die Frequenzsprung-Gruppen wie zuvor beschrieben angibt. Für die FDM-/TDM-Funkübertragung zwischen den Funkfeststationen BTS und Mobilfunkstationen MSa und MSb wird dem Frequenzsprung-Schaltteil FHU von der Steuereinrichtung der Inhalt der (aktuellen) Tabelle TAB mitgeteilt. Dazu erzeugt die Steuereinrichtung BSC mittels der Mikroprozessorschaltung PROC Signalisierungsprotokolle, die sie über die Schnittstelle Abis an die Funkfeststation sendet. Dabei greift die Mikroprozessorschaltung PROC auf den Speicher MEM zu, in dem die Tabelle über die Frequenzsprung-Gruppen abgelegt ist. Diese (aktuelle) Tabelle und andere (neue) Tabellen wurden zuvor z.B. mittels eines Personal-Computers in der Betriebs- und Wartungszentrale OMC erstellt und über die X.25-Schnittstelle INTEX in den Speicher MEM geschrieben. Der Inhalt der (aktuellen) Tabelle wird von der Steuereinrichtung BSC an das Frequenzsprung-Schaltteil FHU der jeweiligen Funkfeststation BTS übertragen. Das Frequenzsprung-Schaltteil FHU schaltet die Funkübertragungskanäle zwischen der Funkfeststation BTS und den Mobilstationen MSa und MSb auf die Trägerfrequenzen, so daß für jeden Funkübertragungskanal die Trägerfrequenz innerhalb einer Frequenzsprung-Gruppe G1 pseudo-zufällig gewechselt wird. Damit die Mobilstationen MSa und MSb Funkverbindungen aufbauen und synchron zu den obigen Frequenzsprung-Verfahren ihre Sende- und Empfangsfrequenzen ändern können, signalisiert die Funkfeststation BTS an jede der Mobilstationen solche Sprungparameter, wie etwa im GSM-Standard genannten "hopping sequence number", "hopping group number" und "mobile allocation index offset".

Die Steuereinrichtung BSC fragt fortlaufend über die Schnittstelle Abis die Bitfehlerrate (BER) der einzelnen Funkverbindungen ab. Ist zumindest eine der BER kleiner als ein Schwellwert, so ist eine Änderung der Tabelle angezeigt. Auf folgende einfache Art und Weise kann die.(aktuelle) Tabelle, die im Speicher MEM abgelegt ist, geändert werden und in eine neue Tabelle überführt werden:

Im Speicher MEM sind eine aktuelle Tabelle und mehrere neue Tabellen mit verschiedenen und mit unterschiedlich vielen Frequenzsprung-Gruppen abgelegt. Es gibt demnach Tabellen mit vielen Frequenzsprung-Gruppen, die eine geringe Übertragungsqualität der Funkübertragung ermöglichen, und Tabellen mit wenigen Frequenzsprung-Gruppen, die eine Funkübertragung mit hoher Übertragungsqualität ermöglichen. Soll nun die aktuelle Tabelle so geändert werden, daß eine höhere Übertragungsqualität ermöglicht wird, so greift die Mikroprozessorschaltung PROC auf eine im Speicher MEM abgelegte neue Tabelle zu, errechnet entsprechend den geschilderten Verfahren mehrere temporäre Tabellen und steuert eine schrittweise Überführung der aktuellen Tabelle in die neue Tabelle.

Das hier beschriebene Ausführungsbeispiel der Erfindung ist für eine FDM-/TDM-Funkübertragung in einem zellularen Mobilfunksystem, wie beispielsweise im GSM (Gobal System for Mobile Communications) zugeschnitten. Es sind jedoch auch zahlreiche andere Ausführungsführungsbeispiele der Erfindung denkbar in anderen Funksystemen, die für ein Frequenzsprung-Verfahren ausgelegt sind, wie etwa in militärischen Funksystemen, Betriebsfunksystem oder drahtlosen Bürokommunikationssystemen. Weiterhin ist die Erfindung auch ausführbar für eine FDM-/CDM-Funkübertragung, d.h. für eine Funkübertragung mit Vielfachzugriff auf verschiedene Trägerfrequenzen und auf verschiedene Codes (CDM: Code Devision Multiplex), indem Frequenzsprung-Gruppen durch Zuordnung von Frequenz- und Codekanälen gebildet werden.

## Patentansprüche

1. Verfahren (100) zum Neuordnen von Frequenzsprung-Gruppen für eine FDM-/TDM-Funkübertragung mit folgenden Schritten:
- für einen TDM-Zeitrahmen werden die Frequenzsprung-Gruppen (G1 bis G14) durch eine Zuordnung (TAB) von Trägerfrequenzen (C0 bis C3) und Zeitschlitzen (T0 bis T7) gebildet (110), so daß jede Frequenzsprung-Gruppe (G4) mindestens zwei der Trägerfrequenzen (C0, C1) umfaßt und mindestens einem der Zeitschlitze (T2) zugeordnet ist,
- falls die Zuordnung (TAB) geändert werden soll (120), wird sie schrittweise geändert und in eine neue Zuordnung (TAB') überführt (130 bis 133), indem jeweils für einen von N Teilbereichen (P1 bis P4) des TDM-Zeitrahmens neue Frequenzsprung-Gruppen (G1 bis G11) gebildet werden, wobei jedem der Teilbereiche mindestens einer der Zeitschlitze zugeordnet wird,
**dadurch gekennzeichnet,** daß
- eine durchschnittliche Verkehrslast (TL) in allen Zeitschlitzen (T0 bis T7) ermittelt wird (131 B),
- eine Verkehrslast (TLn) für jeden der Zeitschlitze ermittelt (131 C) wird und
- die Zeitschlitze anhand ihrer Verkehrslasten (TLn) den Teilbereichen zugeordnet werden, um in allen Teilbereichen (P1 bis P4) eine Verkehrslast einzustellen, die der durchschnittlichen Verkehrslast (TL) weitestgehend entspricht (131 E).

2. Verfahren (100) nach Anspruch 1, dadurch gekennzeichnet, daß in Abhängigkeit von der ermittelten durchschnittlichen Verkehrslast (TL) eine Anzahl (PS) von den Teilbereichen zuzuordnenden Zeitschlitzen bestimmt wird (131 D).

3. Verfahren (100) nach Anspruch 2, dadurch gekennzeichnet, daß die Anzahl (PS) umso geringer bestimmt wird, desto größer die durchschnittliche Verkehrslast (TL) ist.

4. Verfahren (100) nach Anspruch 2, dadurch gekennzeichnet, daß die Anzahl (PS) von Zeitschlitzen für alle Teilbereiche gleich groß bestimmt wird.

5. Verfahren (100) nach Anspruch 1, dadurch gekennzeichnet, daß zur Überführung der Zuordnung (TAB) in die neue Zuordnung (TAB') temporäre Zuordnungen (TRANS1, TRANS2, ...) erstellt werden, indem innerhalb der Zuordnung (TAB) nacheinander für den ersten, zweiten bis letzten der Teilbereiche (P1 bis P4) die neuen Frequenzsprung-Gruppen gebildet werden, und daß auf die temporären Zuordnungen für die FDM-/TDM-Funkübertragung jeweils für eine vorgebbare Zeitdauer zugegriffen wird, die einem ganzen Vielfachen einer TDM-Zeitrahmendauer (Zyklus) entspricht.

6. Verfahren (100) nach Anspruch 1, dadurch gekennzeichnet, daß fortlaufend die Übertragungsqualität der FDM-/TDM-Funkübertragung für jede Frequenzsprung-Gruppe (G1 bis G14) ermittelt wird und daß die Zuordnung (TAB) geändert wird (120), falls die Übertragungsqualität für mindestens eine der Frequenzsprung-Gruppen unter einem Schwellwert liegt.

7. Steuereinrichtung (BSC), die für mindestens eine Funkfeststation (BTS) eine FDM-/TDM-Funkübertragung steuert, indem sie Frequenzsprung-Gruppen (hopping groups) vorgibt und neu ordnet, und die:
- einen Speicher (MEM) enthält, in dem mindestens eine Zuordnung von Trägerfrequenzen (C0 bis C3) und Zeitschlitzen (T0 bis T7) als Tabelle (TAB) abgelegt ist, die die Frequenzsprung-Gruppen (G1 bis G14) für einen TDM-Zeitrahmen angibt,
- einen Steuerrechner (PROC) enthält, der mit dem Speicher (MEM) und mit der Funkfeststation (BTS) verbunden ist, der fortlaufend und für jede Frequenzsprung-Gruppe eine Übertragungsqualität der FDM-/TDM-Funkübertragung ermittelt und mit einem Schwellwert vergleicht und der aus der Tabelle (TAB) schrittweise eine neue Tabelle (TAB') errechnet, indem er jeweils für einen von N Teilbereichen (P1 bis P4) des TDM-Zeitrahmens neue Frequenzsprung-Gruppen (G1' bis G11') vorgibt, falls die Übertragungsqualität mindestens einer der Frequenzsprung-Gruppen (G1 bis G14) unter dem Schwellwert liegt,
**dadurch gekennzeichnet,** daß
der Steuerrechner (PROC) anhand einer Kanalbelegung eine durchschnittliche Verkehrslast (TL) in allen Zeitschlitzen (T0 bis T7) und eine Verkehrslast für jeden Zeitschlitz ermittelt und daß der Steuerrechner (PROC) die Zeitschlitze anhand ihrer Verkehrslasten (TLₙ) den Teilbereichen zuordnet, um in allen Teilbereichen (P1 bis P4) eine Verkehrslast einzustellen, die der durchschnittlichen Verkehrslast (TL) weitestgehend entspricht.

8. Steuereinrichtung (BSC) nach Anspruch 7, dadurch gekennzeichnet, daß der Steuerrechner (PROC) zur Ermittlung der jeweiligen Übertragungsqualität die Bitfehlerraten der einzelnen FDM-/TDM-Funkübertragungen zyklisch von den Funkfeststationen (BTS) abfragt und durch zeitliche Mitteilung auswertet.

9. Steuereinrichtung (BSC) nach Anspruch 7, dadurch gekennzeichnet, daß der Steuerrechner (PROC) eine prozessorgesteuerte Schaltung ist, die ein Frequenzsprung-Schaltteil (FHU) in der jeweiligen Funkfeststation (BTS) überwacht und steuert und die die neue Tabelle (TAB') dann errechnet, falls eine der Trägerfrequenzen (C0 bis C3) in dem Frequenzsprung-Schaltteil (FHU) ausfällt.
